# EUROPÄISCHE PATENTSCHRIFT

(11) **EP 1 163 133 B1**
(45) Veröffentlichungstag und Bekanntmachung des Hinweises auf die Patenterteilung: **06.08.2003**
(21) Anmeldenummer: 00920530.3
(22) Anmeldetag: 21.03.2000
(51) Int. Cl.: B60T 1/00

(54) **STEUERVENTILHALTEELEMENT**
CONTROL VALVE RETAINING ELEMENT
ELEMENT DE RETENUE POUR SOUPAPE DE COMMANDE

(30) Priorität: 25.03.1999 DE 29905522 U
(43) Veröffentlichungstag der Anmeldung: 19.12.2001
(73) Patentinhaber: LUCAS INDUSTRIES PUBLIC LIMITED COMPANY, Solihull B90 4LA (GB)
(72) Erfinder: ORTEL, Peter, D-56112 Lahnstein (DE); FRIEDSAM, Ludwig, D-56651 Oberdürenbach (DE)
(74) Vertreter: Beyer, Andreas, Dr.
(86) Internationale Anmeldenummer: EP0002497
(87) Internationale Veröffentlichungsnummer: WO00058140

(56) Entgegenhaltungen:
- WO-A1-96/14230
- DE-C2- 4 408 993
- US-A- 5 556 173
- US-A- 5 778 754

## Beschreibung

Die Erfindung betrifft ein Steuerventilhalteelement, das in einem Steuerventil eines Bremskraftverstärker zum Einsatz kommt und das ein Faltenbalgende und optional ein Luftfilterelement aufnimmt und bezüglich einer Betätigungsstange des Bremskraftverstärkers positioniert.

Ein solches Steuerventilhalteelement kommt insbesondere bei Bremskraftverstärkern zum Einsatz, bei denen die Verstärkungskraft aus einer Luftdruckdifferenz innerhalb des Bremskraftverstärkers resultiert. Diese Bremskraftverstärker weisen in einem Gehäuse zwei Kammern auf, die mittels einer beweglichen Wand gasdicht voneinander getrennt sind. Ein Steuerventil, das üblicherweise mittels einer Betätigungsstange betätigbar ist, dient dazu, in die eine Kammer wahlweise einen im Vergleich zur anderen Kammer höheren Druck einzuspeisen, so daß an der beweglichen Wand eine Druckdifferenz entsteht, aus der sich die gewünschte Verstärkungskraft ergibt. Zum Schutz vor Staub, Schmutzpartikeln und anderen Umgebungseinflüssen ist das Steuerventil von einem Faltenbalg umgeben, dessen eines Ende mittels des genannten Halteelementes an der Betätigungsstange festgelegt ist. Zumeist sind Bremskraftverstärker der genannten Art als Unterdruck-Bremskraftverstärker ausgeführt. Die Erfindung kann jedoch auch bei rein hydraulisch arbeitenden Bremskraftverstärkern Verwendung finden.

Aus der EP 0 790 910 B1 ist ein Halteelement bekannt, das zur Aufnahme und Positionierung des Endes eines das Steuerventil eines Unterdruckbremskraftverstärkers vor Schmutz schützenden Faltenbalgs auf einer Betätigungsstange des Steuerventils dient. Das Halteelement ist mittels Preßsitz auf der Betätigungsstange unverrückbar angeordnet und weist an seinem pedalseitigen Ende einen Haltekragen auf, der das ringförmige Faltenbalgende aufnimmt. Bei einer Verschiebung der Betätigungsstange wird das Halteelement mitgenommen und mit ihm das in dem Haltekragen aufgenommene Faltenbalgende.

Da das Halteelement mittels Preßsitz auf der Betätigungsstange befestigt ist, müssen die Fertigungstoleranzen zwischen dem Halteelement und der Betätigungsstange sehr eng gewählt werden. Dies erhöht zwangsläufig die Herstellungskosten des Halteelements. Des weiteren gestaltet sich der Einbau des Halteelements aufwendig, da es auf die Betätigungsstange aufgepreßt und gleichzeitig eine exakte Positionierung des Halteelements relativ zur Betätigungsstange durchgeführt werden muß. Lockert sich der Preßsitz des Halteelements, kann sich das Halteelement aus der gewünschten Position relativ zur Betätigungsstange entfernen. Der aus der EP 0 790 910 B1 bekannte Unterdruck-Bremskraftverstärker hat auch ein ringzylindrisches Luftfilterelement, das um die Betätigungsstange herum angeordnet und von einem separaten, im Steuerventilgehäuse vorhandenen Einsatz gehalten ist.

Ein ganz ähnliches Halteelement ist aus der DE 44 08 993 A1 bekannt.

Der vorliegenden Erfindung liegt die Aufgabe zugrunde, ein Halteelement zur Aufnahme und Positionierung eines Faltenbalgendes relativ zu einer Betätigungsstange in einem Unterdruckbremskraftverstärker zur Verfügung zu stellen, das kostengünstiger hergestellt und einfach und sicher auf der Betätigungsstange positioniert werden kann.

Vorzugsweise soll das erfindungsgemäße Halteelement auch ein Luftfilterelement aufnehmen und positionieren können.

Diese Aufgabe ist mit einem Halteelement gelöst, das die im Anspruch 1 angegebenen Merkmale aufweist.

Wie das eingangs beschriebene, bekannte Halteelement umfaßt das erfindungsgemäße Steuerventilhalteelement für einen Bremskraftverstärker einen hohlzylindrischen Grundkörper und einen an dem Grundkörper angebrachten ersten Haltekragen mit wenigstens einer Seitenwand zur Abstützung eines Faltenbalgendes. Zusätzlich ist jedoch ein zweiter Haltekragen vorhanden, der von einem ersten Ende des Grundkörpers radial nach innen ragt und der sich in Umfangsrichtung erstreckt. Der zweite Haltekragen hat eine erste Seitenfläche, die zum Zusammenwirken mit einem stufenförmigen Anschlag einer Bremskraftverstärker-Betätigungsstange vorgesehen ist, und eine gegenüberliegende zweite Seitenfläche, die zum Zusammenwirken mit einer Druckfeder des Bremskraftverstärkers vorgesehen ist.

Auf diese Weise kann das erfindungsgemäße Steuerventilhalteelement unter Verwendung eines bereits an der Betätigungsstange vorhandenen Anschlags, an dem in herkömmlichen Bremskraftverstärkern eine die Betätigungsstange rückstellende Druckfeder angreift, in einer genau definierten Position relativ zur Betätigungsstange angebracht werden. Die Einhaltung dieser Position wird durch die Einspannung des Steuerventilhalteelementes zwischen der Druckfeder und dem Anschlag der Betätigungsstange gewährleistet, d.h. die Druckfeder preßt den zweiten Haltekragen gegen den Anschlag. Um die Fertigung des erfindungsgemäßen Steuerventilhalteelementes und dessen Einbau zusätzlich zu vereinfachen, ist das erfindungsgemäße Steuerventilhalteelement vorzugsweise einteilig ausgeführt.

Gemäß einer bevorzugten Ausgestaltung des erfindungsgemäßen Haltekörpers ist dessen Grundkörper mit einem dritten Haltekörper versehen, der zur Aufnahme eines Luftfilters dient.

Mittels dieses dritten, sich vorzugsweise von dem Grundkörper radial nach außen und in Umfangsrichtung erstreckenden Haltekragens kann ein beispielsweise ringförmiger Luftfilter aufgenommen und relativ zur Betätigungsstange positioniert werden. Die Anzahl der zusammenzubauenden Elemente wird somit reduziert, der Zusammenbau vereinfacht und die Betriebssicherheit erhöht.

Bei einer weiteren Ausführungsform der Erfindung weist der dritte Haltekragen einen zumindest im wesentlichen S-förmigen Querschnitt auf. Auf diese Weise wird eine ausreichend breite und sich in Umfangsrichtung erstreckende Auflage- bzw. Haltefläche für das Luftfilterelement erhalten. Der dritte Haltekragen ist vorzugsweise an dem ersten Ende des Grundkörpers angebracht.

Gemäß einer besonders bevorzugten Ausgestaltung des erfindungsgemäßen Steuerventilhalteelementes legt der zweite Haltekragen eine zumindest im wesentlichen ringförmige Öffnung fest, deren Durchmesser einem Außendurchmesser der Betätigungsstange entspricht. Der Innendurchmesser des Grundkörpers ist dabei vorzugsweise größer als der Außendurchmesser der Betätigungstange. Auf diese Weise kann das erfindungsgemäße Steuerventilhalteelement beim Zusammenbau des Bremskraftverstärkers auf einfache Weise auf die Betätigungsstange aufgeschoben werden, bis die erste Seitenfläche des zweiten Haltekragens mit dem Anschlag der Betätigungsstange zusammenwirkt. Eine exakte und aufwendige Positionierung, wie sie beispielsweise bei Verwendung eines Preßsitzes erforderlich ist, entfällt hier.

Vorzugsweise erstreckt sich auch der erste Haltekragen radial von dem Grundkörper nach außen. Des weiteren ist der erste Haltekragen vorteilhaft mit zwei voneinander beabstandeten, sich parallel zueinander erstreckenden Seitenwänden versehen, um das Faltenbalgende noch sicherer zu halten.

Auch wenn das erfindungsgemäße Steuerventilhalteelement aus jedem geeigneten Material bestehen kann, besteht es aus Fertigungs- und Kostengründen vorzugsweise aus Kunststoff.

Im folgenden wird die Erfindung anhand der beigefügten Zeichnungen detaillierter erläutert. Es zeigt:
- Fig. 1: den hier interessierenden Teil eines Bremskraftverstärkers mit dem erfindungsgemäßen Steuerventilhalteelement im Längsschnitt, und
- Fig. 2: den Bereich aus Fig. 1 mit dem erfindungsgemäßen Steuerventilhalteelement in vergrößerter Darstellung.

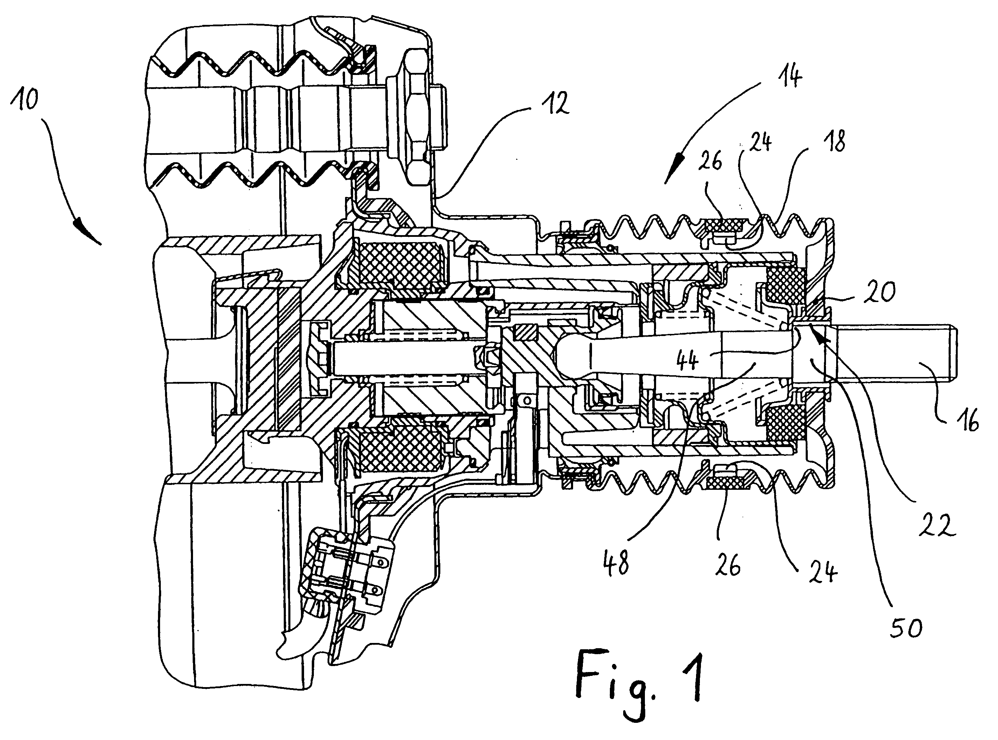

In Fig. 1 ist der hier interessierende Teil eines Unterdruckbremskraftverstärkers 10 mit einem Gehäuse 12 dargestellt, in das ein Steuerventil 14 ragt, das mittels einer Betätigungsstange 16 betätigt werden kann. Das Steuerventil 14 ist von einem Faltenbalg 18 umgeben, dessen eines Ende an einem rohrförmigen Fortsatz des Bremskraftverstärkergehäuses 12 befestigt ist, und dessen anderes, wulstförmig ausgebildete Ende 20 sich an einem Steuerventilhalteelement 22 abstützt, durch das dieses Ende 20 an der Betätigungsstange 16 festlegt ist. Der Faltenbalg 18 schützt das Steuerventil 14 gegen äußere Einflüsse, z.B. Staub und kleine Schmutzpartikel, und weist mehrere in Umfangsrichtung verteilt angeordnete Umgebungslufteinlässe 24 auf, von denen jeder mit einem Filter 26 versehen ist.

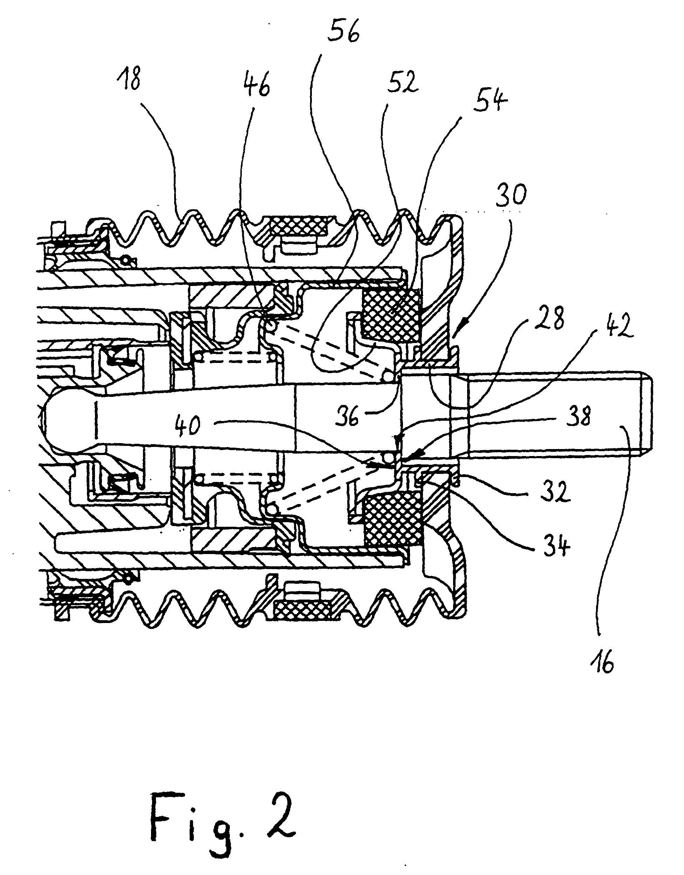

Wie genauer aus Fig. 2 hervorgeht, weist das Steuerventilhalteelement 22 einen hohlzylindrischen Grundkörper 28 und einen damit einstückig verbundenen ersten Haltekragen 30 auf. Der erste Haltekragen 30 dient zur Abstützung, Aufnahme und Positionierung des Faltenbalgendes 20 und ist hier von zwei sich radial parallel nach außen erstreckenden, axial voneinander beabstandeten Seitenwänden 32 und 34, die in Umfangsrichtung des Grundkörpers 28 verlaufen, und einem Teil der Umfangsfläche des Grundkörpers 28 gebildet.

An einem dem Steuerventil 14 zugekehrten ersten Ende des Grundkörpers 28 ist ein sich radial nach innen und in Umfangsrichtung erstreckender zweiter Haltekragen 36 ebenfalls einstückig mit dem Grundkörper 28 ausgebildet, der eine erste Seitenfläche 38 und eine zweite Seitenfläche 40 aufweist. Der zweite Haltekragen 36 definiert eine hier ringförmige Öffnung 42, die einen Durchtritt der Betätigungsstange 16 durch das Steuerventilhalteelement 22 erlaubt. Im zusammengebauten Zustand wirkt die erste Seitenfläche 38 mit einem Anschlag 44 der Betätigungsstange 16 zusammen, gegen den das Steuerventilhalteelement 22 von einer die Betätigungsstange 16 rückstellenden Druckfeder 46 gedrückt wird. Bei dem gezeigten Ausführungsbeispiel ist der Anschlag 44 durch eine Stufe zwischen Bereichen unterschiedlichen Durchmessers 48 und 50 der Betätigungsstange 16 gebildet.

Beim Zusammenbau des steuerventils 14 wird das Steuerventilhalteelement 22 so an der Betätigungsstange 16 angebracht, daß die erste Seitenfläche 38 des zweiten Haltekragens 36 mit dem Anschlag 44 in Berührung kommt. Die Druckfeder 46 kann dann auf die zweite Seitenfläche 40 des zweiten Haltekragens 36 wirken, so daß das Steuerventilhalteelement 22 zwischen dem Anschlag 44 und der Druckfeder 46 eingespannt und gegenüber der Betätigungsstange 16 eindeutig positioniert ist. Die hier beschriebene Ausgestaltung des zweiten Haltekragens 36 und des Anschlags 44 ist lediglich als beispielhaft zu verstehen, da verschiedenste Ausgestaltungen des zweiten Haltekragens 36 und des Anschlags 44 möglich sind, solange gewährleistet ist, daß eine erste Seitenfläche mit dem Anschlag 44 und eine zweite Seitenfläche mit der Druckfeder 46 so zusammenwirken, daß das Steuerventilhalteelement 22 gegenüber der Betätigungsstange 16 in einer definierten Position gehalten wird.

Des weiteren weist das Steuerventilhalteelement 22 einen dritten Haltekragen 52 auf, der sich im gezeigten Ausführungsbeispiel an dem ersten Ende des Grundkörpers 28 radial gegenüber dem zweiten Haltekragen 36 nach außen und in Umfangsrichtung erstreckt. Der dritte Haltekragen 52 ist einstückig mit den Grundkörper 28 ausgebildet und so geformt, daß er ein großvolumiges Luftfilterelement 54 abstützen und im Steuerventil 14 positionieren kann. Hierzu weist, wie in Fig. 2 gezeigt, der dritte Haltekragen 52 einen im wesentlichen S-förmigen Querschnitt auf, so daß das ringförmige, sich in Axialrichtung erstreckende Luftfilterelement 54 ausreichend umfangen wird.

Bei dem dargestellten Ausführungsbeispiel stützt sich das Luftfilterelement 54 axial zum einen an der radial gerichteten Seitenwand des dritten Haltekragens 52 und zum anderen auf seiner gegenüberliegenden Seite innen an dem wulstförmig verdickten Faltenbalgende 20 ab. Das Luftfilterelement 54 ist demnach axial zwischen dem Faltenbalgende 20 und dem dritten Haltekragen 52 quasi eingespannt. Radial stützt sich das Luftfilterelement 54 auf seiner Innenseite am dritten Haltekragen 52 und auf seiner Außenseite an einem im Gehäuse des Steuerventils 14 vorhandenen Einsatz 56 ab, der auch als Widerlager für die Druckfeder 46 dient.

Gemäß einem hier nicht dargestellten, weiteren Ausführungsbeispiel kann der dritte Haltekragen 52, der im zuvor beschriebenen Ausführungsbeispiel nur eine sich im wesentlichen radial nach außen erstreckende Seitenwand aufweist, auch zwei axial voneinander beabstandete, sich radial nach außen erstreckende Seitenwände aufweisen. Das Luftfilterelement ist dann zwischen diesen beiden Seitenwänden aufgenommen und stützt sich nicht wie bei dem in den Figuren dargestellten Ausführungsbeispiel innen am wulstförmig verdickten Faltenbalgende 20 ab.

Bei allen Ausführungsbeispielen ist vorzugsweise, um ein einfaches Anbringen des Steuerventilhalteelementes 22 an der Betätigungsstange 16 zu gewährleisten, der Innendurchmesser des Grundkörpers 28 etwas größer als der größte Außendurchmesser (hier des Bereichs 50) der Betätigungsstange 16, über den das Steuerventilhalteelement 22 geschoben werden soll. Auf diese Weise kann das Steuerventilhalteelement 22 einfach-auf die-Betätigungsstange 16 aufgeschoben werden, bis die erste Seitenfläche 38 des zweiten Haltekragens 36 den Anschlag 44 berührt. Der zweite Haltekragen 36 definiert mit seiner hier kreisförmigen Öffnung 42 einen gegenüber dem Grundkörper 28 kleineren Innendurchmesser und sorgt so für eine Führung des gesamten Steuerventilhalteelementes 22 auf der Betätigungsstange 16. Im dargestellten Ausführungsbeispiel entspricht der Durchmesser der Öffnung 42 des zweiten Haltekragens 36 bis auf übliche Toleranzen dem Außendurchmesser des Bereiches 48 der Betätigungsstange 16.

Das Steuerventilhalteelement 22 vereinfacht den Aufbau eines Bremskraftverstärkers und reduziert dessen Herstellungskosten, da die Anbringung eines großvolumigen Luftfilterelementes kein separates Teil mehr erfordert. Stattdessen wird das Luftfilterelement 54 auf einfache Weise in dem Steuerventil 14 angebracht, indem es zusammen mit dem Steuerventilhalteelement 22 auf die Betätigungsstange 16 aufgeschoben und von diesem in einer gewünschten Position gehalten wird.

Obwohl das erfindungsgemäße Steuerventilhalteelement 22 hier als einteiliger Körper beschrieben und gezeigt ist, kann es auch aus einzelnen Komponenten aufgebaut sein. Beispielsweise können die Haltekragen 30, 36 und 52 separate Teile sein, die nachträglich mit dem Grundkörper 28 verbunden werden, etwa durch eine Rastverbindung. Das Steuerventilhalteelement 22 ist mit Vorteil aus Kunststoff hergestellt, was seine kostengünstige Produktion beispielsweise als Spritzgußteil ermöglicht.

## Patentansprüche

1. Steuerventilhalteelement (22) für einen Bremskraftverstärker (10), mit:
- einem hohlzylindrischen Grundkörper (28), und
- einem mit dem Grundkörper (28) verbundenen ersten Haltekragen (30) mit wenigstens einer Seitenwand zur Abstützung eines Faltenbalgendes (20),
**dadurch gekennzeichnet, daß**
- ein zweiter Haltekragen (36) sich von einem ersten Ende des Grundkörpers (28) radial nach innen und in Umfangsrichtung erstreckt, wobei der zweite Haltekragen (36) eine erste Seitenfläche (38) zum Zusammenwirken mit einem Anschlag (44) einer Betätigungsstange (16) und eine der ersten Seitenfläche (38) gegenüberliegende zweite Seitenfläche (40) zum Zusammenwirken mit einer Druckfeder (46) aufweist.

2. Steuerventilhalteelement nach Anspruch 1,
**dadurch gekennzeichnet, daß** mit dem Grundkörper (28) ein dritter Haltekragen (52) verbunden ist, der zum Aufnehmen eines Luftfilterelementes (54) ausgebildet ist.

3. Steuerventilhalteelement nach Anspruch 2,
**dadurch gekennzeichnet, daß** sich der dritte Haltekragen (52) radial nach außen und in Umfangsrichtung erstreckt.

4. Steuerventilhalteelement nach Anspruch 2 oder 3,
**dadurch gekennzeichnet, daß** der dritte Haltekragen (52) einen im wesentlichen S-förmigen Querschnitt hat.

5. Steuerventilhalteelement nach einem der Ansprüche 2 bis 4,
**dadurch gekennzeichnet, daß** der dritte Haltekragen (52) sich von dem ersten Ende des Grundkörpers (28) erstreckt.

6. Steuerventilhalteelement nach einem der Ansprüche 1 bis 5,
**dadurch gekennzeichnet, daß** der zweite Haltekragen (36) eine zumindest im wesentlichen kreisförmige Öffnung (42) eines Durchmessers festlegt, der einem Außendurchmesser der Betätigungsstange (16) entspricht, und daß der Innendurchmesser des Grundkörpers (28) größer als der Außendurchmesser der Betätigungsstange (16) ist.

7. Steuerventilhalteelement nach einem der Ansprüche 1 bis 6,
**dadurch gekennzeichnet, daß** sich der erste Haltekragen (30) radial nach außen erstreckt.

8. Steuerventilhalteelement nach einem der Ansprüche 1 bis 7,
**dadurch gekennzeichnet, daß** der erste Haltekragen (30) zwei voneinander beabstandete, sich parallel zueinander erstreckende Seitenwände (32, 34) aufweist.

9. Steuerventilhalteelement nach einem der Ansprüche 1 bis 8,
**dadurch gekennzeichnet, daß** das Steuerventilhalteelement (22) aus Kunststoff besteht und insbesondere einstückig ausgebildet ist.

## Claims

1. Control valve retaining element (22) for a brake booster (10), comprising:
- a hollow cylindrical base member (28), and
- a first retaining collar (30), which is connected to the base member (28) and has at least one side wall for supporting a bellows end (20),
**characterised in that**
- a second retaining collar (36) extends radially inwards from a first end of the base member (28) and in peripheral direction, wherein the second retaining collar (36) comprises a first lateral face (38) for cooperation with a stop (44) of an actuating rod (16) and a second lateral face (40) lying opposite the first lateral face (38) for cooperation with a compression spring (46).

2. Control valve retaining element according to claim 1,
**characterised in that** connected to the base member (28) is a third retaining collar (52) which is designed so as to accommodate an air filter element (54).

3. Control valve retaining element according to claim 2,
**characterised in that** the third retaining collar (52) extends radially outwards and in peripheral direction.

4. Control valve retaining element according to claim 2 or 3,
**characterised in that** the third retaining collar (52) has a substantially S-shaped cross section.

5. Control valve retaining element according to one of claims 2 to 4,
**characterised in that** the third retaining collar (52) extends from the first end of the base member (28).

6. Control valve retaining element according to one of claims 1 to 5,
**characterised in that** the second retaining collar (36) defines an at least substantially circular opening (42) of a diameter which corresponds to an outside diameter of the actuating rod (16), and that the inside diameter of the base member (28) is greater than the outside diameter of the actuating rod (16).

7. Control valve retaining element according to one of claims 1 to 6,
**characterised in that** the first retaining collar (30) extends radially outwards.

8. Control valve retaining element according to one of claims 1 to 7,
**characterised in that** the first retaining collar (30) comprises two side walls (32, 34) which are spaced apart from one another and extend parallel to one another.

9. Control valve retaining element according to one of claims 1 to 8,
**characterised in that** the control valve retaining element (22) is made of plastics material and is in particular of an integral construction.

## Revendications

1. Elément de maintien de soupape de commande (22) pour un amplificateur de force de freinage (10), comportant:
- un corps de base (28) cylindrique creux, et
- une première collerette de maintien (30), liée au corps de base (28) et comportant au moins une paroi latérale permettant l'appui d'une extrémité de soufflet (20),
**caractérisé en ce que**
- une deuxième collerette de maintien (36) s'étend radialement vers l'intérieur et dans la direction périphérique, à partir d'une première extrémité du corps de base (28), la deuxième collerette de maintien (36) présentant une première surface latérale (38) coopérant avec une butée (44) d'une tige d'actionnement (16), et une deuxième surface latérale (40), située à l'opposé de la première surface latérale (38), coopérant avec un ressort de compression (46).

2. Elément de maintien de soupape de commande suivant la revendication 1, **caractérisé en ce qu'**au corps de base (28), est reliée une troisième collerette de maintien (52), qui est conçue pour recevoir un élément de filtre à air (54).

3. Elément de maintien de soupape de commande suivant la revendication 2, **caractérisé en ce que** la troisième collerette de maintien (52) s'étend radialement vers l'extérieur et dans la direction périphérique.

4. Elément de maintien de soupape de commande suivant la revendication 2 ou la revendication 3, **caractérisé en ce que** la troisième collerette de maintien (52) présente une section essentiellement en forme de S.

5. Elément de maintien de soupape de commande suivant l'une des revendications 2 à 4, **caractérisé en ce que** la troisième collerette de maintien (52) s'étend à partir de la première extrémité du corps de base (28).

6. Elément de maintien de soupape de commande suivant l'une des revendications 1 à 5, **caractérisé en ce que** la deuxième collerette de maintien (36) détermine une ouverture (42) au moins sensiblement circulaire d'un diamètre qui correspond à un diamètre extérieur de la tige d'actionnement (16), et **en ce que** le diamètre intérieur du corps de base (28) est plus grand que le diamètre extérieur de la tige d'actionnement (16).

7. Elément de maintien de soupape de commande suivant l'une des revendications 1 à 6, **caractérisé en ce que** la première collerette de maintien (30) s'étend radiatement vers l'extérieur.

8. Elément de maintien de soupape de commande suivant l'une des revendications 1 à 7, **caractérisé en ce que** la première collerette de maintien (30) présente deux parois latérales (32, 34) distantes l'une de l'autre et s'étendant parallèlement l'une à l'autre.

9. Elément de maintien de soupape de commande suivant l'une des revendications 1 à 8, **caractérisé en ce que** l'élément de maintien de soupape de commande (22) est constitué de matière plastique et, en particulier, est réalisé en une seule pièce.
